# EUROPÄISCHE PATENTANMELDUNG

(11) **EP 1 077 124 A2**
(43) Veröffentlichungstag der Anmeldung: **21.02.2001**
(21) Anmeldenummer: 00117139.6
(22) Anmeldetag: 10.08.2000
(51) Int. Cl.: B29C 59/14

(54) **Verfahren zur Herstellung von Polymerstrukturen mittels eines Ätzprozesses**

(30) Priorität: 19.08.1999 DE 19939317
(71) Anmelder: ROBERT BOSCH GMBH, 70442 Stuttgart (DE)
(72) Erfinder: Schwarz, Thomas, 72072 Tübingen (DE); Elsner, Bernhard, 70806 Kornwestheim (DE)

(57) **Zusammenfassung**

Es wird ein Verfahren zur Herstellung von Polymerstrukturen auf einem Substrat (30) mittels eines Ätzprozesses mit einem Ätzgas vorgeschlagen. Dazu wird zunächst das Substrat (30) in einer Ätzkammer (12) einer Plasmaätzanlage (1) angeordnet und auf dem Substrat (30) ein Polymer (31) aufgebracht. Dem Ätzgas wird weiter beim Ätzen zumindest zeitweilig ein schwefelhaltiges Gas, insbesondere Schwefeldioxid, zugesetzt. Der Ätzprozeß wird bevorzugt mit einem Ätzgas durchgeführt, das abwechselnd zeitlich periodisch getaktet aus Sauerstoff und Schwefeldioxid besteht.

## Beschreibung

Die Erfindung betrifft ein Verfahren zur Herstellung von Polymerstrukturen, insbesondere von Profilformen in Polymeren, auf einem Substrat mittels eines Ätzprozesses nach der Gattung des Hauptanspruches.

### Stand der Technik

Ein Verfahren zur Oberflächenbehandlung oder Modifikation makromolekularer Verbindungen, wie Polymere oder Scheibenwischergummi, in einer Gasatmosphäre ist aus DE 197 27 783.7 bekannt, wobei das Gas als Plasma vorliegt, das in einer Hochfrequenzanregung im Nieder- oder Normaldruckbereich mittels Mikrowellenanregung erzeugt wird. Weiterhin ist daraus bekannt, eine anisotrope Plasmabehandlung derartiger Verbindungen in einem Sauerstoff- oder einem Sauerstoff-Edelgas-Gasplasma vorzunehmen.

Aus F.D. Egitto und L.J. Matienzo, IBM J. Res. Develop., 1994, 38, S. 423 - 439 ist weiter bekannt, Polymeroberflächen durch Plasmaätzen in einer Sauerstoffatmosphäre zu behandeln, um deren Adhäsionseigenschaften zu verbessern.

Im übrigen existieren verschiedene Photoprozesse zur Strukturierung von Polymeren, beispielsweise über UV-Licht oder mittels Excimerlasern oder Elektronenstrahlen, denen eine anschließende Entwicklung bzw. ein Herauslösen der belichteten, strukturierten Polymere folgt.

Als Plasmaätzverfahren sind überdies Prozesse in Barrel-Reaktoren mit isotroper Ätzung bekannt, sowie anisotrope Ätzverfahren über einen RIE-ICP- oder RIE-ECR-Prozeß ( 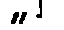 Reactive Ion Etching"). Dazu sei beispielsweise auf den Artikel von R. Hsiao et al., J. Electrochem. Soc., Vol. 144, No. 3, 1997, verwiesen.

In der Anmeldung DE 199 10 984.9 ist bereits zur Verbesserung der Ätzprofile bei Polymerätzprozessen vorgeschlagen worden, dem Ätzgas Sauerstoff Helium oder Wasserstoff zuzugeben.

### Vorteile der Erfindung

Das erfindungsgemäße Verfahren mit den kennzeichnenden Merkmalen des Hauptanspruchs hat gegenüber dem Stand der Technik den Vorteil, daß damit bei der Herstellung von Polymerstrukturen mit Höhen von bis zu 100 µm auf einem Substrat über ein anisotropes Plasmaätzverfahren besonders glatte Flanken der Polymerstrukturen, insbesondere mit einer Rauhigkeit kleiner als 100 nm, bei gleichzeitig besonders senkrechten, d.h. insbesondere nicht bauchigen Trenchgräben erzeugt werden können.

Weiterhin wird auch bei einem Aspektverhältnis der Polymerstrukturen, d.h. dem Verhältnis von Höhe zu Breite, von mehr als 10:1 eine Strukturauflösung von mindestens 1 µm bis 2 µm erreicht. Das erfindungsgemäße Verfahren erzielt zudem hohe Polymerätzraten von bis zu 4 µm pro Minute.

Die mit dem erfindungsgemäßen Verfahren erzeugten Polymerstrukturen sind mechanisch sehr stabil, haften gut auf dem Substrat und zeigen keine relevante Strukturveränderung bei einer Temperaturbehandlung von -60°C bis +250°C, wobei auch ein noch größerer Temperaturbereich bei entsprechender Wahl des Polymermaterials erreichbar ist.

Die auf dem Substrat erzeugten Polymerstrukturen können somit vorteilhaft als aktive Schichten, d.h. beispielsweise als Wellenleiter in der integrierten Optik, als Dielektrikum oder als Negativform für die galvanische Abscheidung von metallischen Mikrobauteilen wie Sensoren oder Aktoren eingesetzt werden.

Weiterhin ist es vorteilhaft, daß das erfindungsgemäße Verfahren als sogenannter 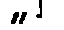 Backend-Prozeß" auf bereits fertigen integrierten Schaltkreisen anwendbar ist und damit intelligente mikrosystemtechnische Komponenten herstellbar sind, die in vielfältigen Anwendungsfeldern wie der Automobiltechnik, der Maschinensteuerung, der Nachrichtentechnik oder im Konsumelektronikbereich Einsatz finden können. Dabei ist es ein weiterer Vorteil, daß die zum Einsatz kommenden Bauteile mit der zugehörigen Auswerteschaltung aufgrund des erfindungsgemäßen Verfahrens kostengünstig, zuverlässig und von hoher Funktionalität sind.

Vorteilhafte Weiterbildungen der Erfindung ergeben sich aus den in den Unteransprüchen genannten Maßnahmen.

So werden durch die Verwendung von reinem Sauerstoff und Schwefeldioxid in zeitlich periodischem Wechsel als Ätzgas besonders glatte und steile Profile bei gleichzeitig hoher Ätzrate und Strukturauflösung erreicht.

Weiter ist es vorteilhaft, wenn der Ätzprozeß zur Erzeugung der Polymerstrukturen auf einem gekühlten Substrat, insbesondere bei einer Substrattemperatur von -30°C bis -120°C, durchgeführt wird.

Schließlich wird eine weitere Verbesserung der Flankensteilheit, Strukturauflösung, Ätzrate und Oberflächenrauhigkeit der erzeugten Polymerprofile erzielt, wenn die in das Substrat eingekoppelt Biasspannung mit dem periodischen Wechsel des Ätzgases korreliert wird. Besonders vorteilhaft wird während der Zeitdauer, indem als Prozeßgas Schwefeldioxid eingesetzt wird, die Biasspannung deutlich vermindert oder abgeschaltet.

Durch das erfindungsgemäße Verfahren lassen sich weiter vorteihaft neben senkrechten Strukturen in Polymeren auch keilförmige Strukturen herstellen, d.h. Strukturen die sich mit zunehmender Tiefe aufweiten oder verjüngen. Solche Strukturen sind besonders nach einer nachfolgenden Abformung, beispielsweise in einem Galvanikprozeß, als Masterstruktur für das Kunststoffspritzgießen geeignet, da die Kunststoffstruktur dann besonders leicht entformt werden kann.

### Zeichnung

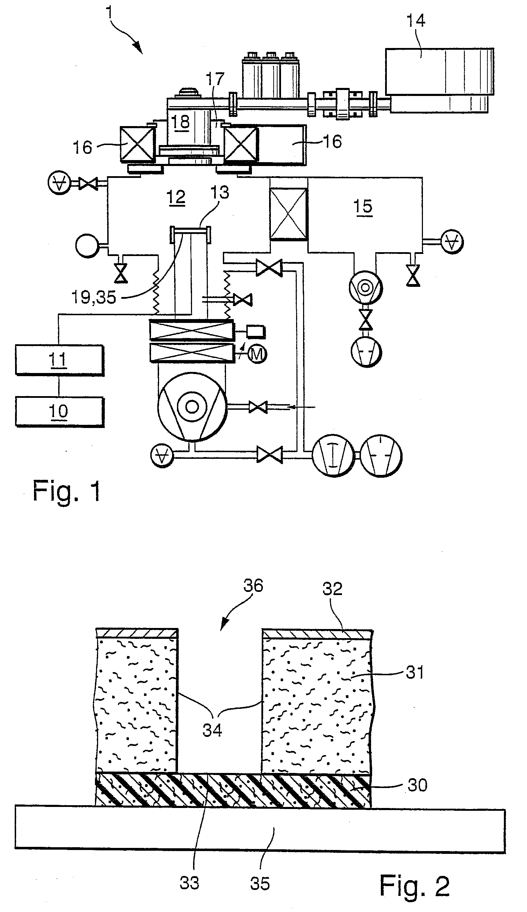

Die Erfindung wird anhand der Zeichnungen und der nachfolgenden Beschreibung näher erläutert. Es zeigen Figur 1 eine Prinzipskizze einer Plasmaätzanlage und Figur 2 einen Schnitt durch eine Polymerstruktur auf einem Substrat.

### Ausführungsbeispiele

Die Figur 1 zeigt eine an sich aus dem Stand der Technik bekannte ECR-Plasmaätzanlage ( 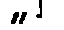 Electron Cyclotron Resonance") als Plasmaätzanlage 1 zur anisotropen Plasmaätzung mit einem Hochfrequenzgenerator 10 zur Erzeugung einer hochfrequenten Substratelektrodenspannung (Biasspannung) mit einer Frequenz von beispielsweise 13,56 MHz, der über entsprechende elektrische Anschlüsse und bei Bedarf unter Zwischenschaltung einer Matchbox 11 mit einer Substratelektrode 35 verbunden ist, und dort in an sich bekannter Weise eine anliegende Biasspannung von 80 Volt bis 200 Volt bewirkt, die in ein Substrat 30 eingekoppelt wird. Als Frequenz für die eingekoppelte hochfrequente Substratelektrodenspannung kommt im übrigen ein weites Frequenzspektrum in Frage. Bevorzugt sind Frequenzen zwischen 50 kHz und 20 MHz.

Weiterhin ist eine Ätzkammer 12, ein Magnetron 14, eine Schleusenkammer 15, ein Elektromagnet 16, ein Prozeßgaseinlaß 17, eine Mikrowelleneinkoppeleinheit 18 und eine Substratelektrodenkühlung 19 vorgesehen. Die Substratelektrodenkühlung 19 ist mit der Substratelektrode 35 wärmeleitend verbunden und bewirkt eine Kühlung der Substratelektrode 35 und über diese auch des darauf angeordneten Substrates 30. Mit der Substratelektrodenkühlung 19 ist eine Temperatur von -30°C bis -120°C auf dem Substrat 30 erreichbar.

Die Substratelektrodenkühlung 19 ist weiterhin mit nicht dargestellten, nach außerhalb der Plasmaätzkammer geführten Anschlüssen versehen, die mit einer ebenfalls nicht dargestellten Kühl-vorrichtung in Verbindung stehen und einen Kältemittelkreislauf ermöglichen.

Auf weitere Details der Plasmaätzanlage 1 wird verzichtet, da sie dem Fachmann bekannt sind.

Figur 2 zeigt eine Vergrößerung eines Teils der Substratelektrode 35 gemäß Figur 1, auf der das Substrat 30 angebracht ist, auf dem sich ein Polymer 31 mit einer Oberflächenmaskierung 32 befindet. Das Polymer 31 wird mittels der Plasmaätzanlage 1 einer Plasmaätzung unterzogen, wobei sich eine Polymerstruktur, beispielsweise in Form eines Trenchgrabens 36 mit Flanken 34 und einem Grund 33 einstellt. Die Plasmaätzung stoppt beim Erreichen des Substrates 30.

Das Substrat 30 ist beispielsweise ein Siliziumwafer oder ein Siliziumwafer mit einer Siliziumverbindung wie SiO₂ oder Si₃N₄ oder einem Metall wie Cu oder Al als Oberflächenschicht, auf dem als Polymer 31 ein Photolack oder Polyimid mit einer Dicke von 5 µm bis 100 µm, beispielsweise 15 µm, aufgebracht ist. Dieses Aufbringen erfolgt vorzugsweise über Aufschleudern oder Aufsprühen. Zusätzlich kann vor dem Aufbringen des Polymers 31 auf das Substrat 30 zunächst noch eine Haftschicht aufgebracht werden, um die Haftung des Polymers 31 auf dem Substrat 30 zu verbessern. Nach dem Aufbringen des Polymers 31 auf das Substrat 30 erfolgt dann eine Trocknung und Temperung des Polymers 31, die hinsichtlich Dauer und Temperatur von dessen Zusammensetzung abhängig ist und zweckmäßig zwischen 150°C und 350°C liegt. Bei üblichen Photolacken beträgt die Endtemperatur beim Tempern typischerweise 200°C.

Anschließend wird auf dem Polymer 31 eine Hartstoffschicht in an sich bekannter Weise über eine Plasmaabscheidung oder ein Aufsputtern oder ein Aufdampfen abgeschieden und über einen an sich bekannten Photoprozeß und eine nachfolgende Plasmaätzung strukturiert, so daß die Oberflächenmaskierung 32 des Polymers 31 aus der strukturierten Hartstoffschicht entsteht. Als Hartstoffschicht eignet sich beispielsweise ein Plasmaoxid oder ein Plasmanitrid wie SiN, TiN oder SiO₂. Möglich sind jedoch auch Metallschichten (z.B. Al) als Hartstoffschicht.

Die eigentliche Ätzung des Polymers 31 zur Strukturierung und Herstellung einer Polymerstruktur, wie des Trenchgrabens 36, wird dann in der ECR-Plasmaätzanlage als Plasmaätzanlage 1 durchgeführt, die über ein Quarzfenster und über die Plasmaeinkoppeleinheit 18 Mikrowellenstrahlung als Energiequelle zur Anregung des zugeführten Ätzgases in einen Plasmabereich eingekoppelt. Mit dieser Konfiguration wird ein extrem hoher Ionisiationsgrad des zugeführten Ätzgases erreicht. Anstelle der ECR-Plasmaätzanlage kann jedoch ebenso eine aus dem Stand der Technik bekannte ICP-Plasmaätzanlage ( 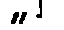 Inductively Coupled Plasma") als Plasmaätzanlage 1 mit ansonsten hinsichtlich Substrattemperatur, Prozeßdruck, Subtratelektrodenspannung, Ätzgasfluß und Ätzgas vergleichbaren Prozeßparametern verwendet werden.

Als erstes Ausführungsbeispiel wird der Ätzkammer 12 ein sauerstoffhaltiges Ätzgas, insbesondere reiner Sauerstoff, bei einem Prozeßdruck von 0,2 µbar bis 10 µbar zugeführt und damit das Polymer 31 geätzt, wobei dem Ätzgas zusätzlich in gleichbleibender Konzentration von 20 Vol.% bis 80 Vol.%, insbesondere 30 Vol.% bis 60 Vol.%, ein schwefelhaltiges Gas zugesetzt wird.

Als schwefelhaltiges Gas eignen sich dabei Gase, die im Laufe des Ätzprozesses unter Einwirkung des Plasmas in positiv geladene Schwefelionen und weitere, positiv geladene Fragmente, Atome oder Moleküle aufgespalten werden, die mit dem Ätzprozeß kompatibel sind, d.h. die die Ätzrate nicht wesentlich beeinflussen und insbesondere keine unerwünschten chemischen Reaktionen mit dem Polymer und/oder dem Substrat eingehen oder verfahrenstechnisch problematisch, beispielsweise giftig oder explosiv sind.

Ganz besonders bevorzugt ist dabei die Kombination von reinem Sauerstoff als Ätzgas mit einer konstanten Zugabe von Schwefeldioxid (SO₂) als schwefelhaltiges Gas in einer Konzentration von 20 Vol.% bis 80 Vol.%. Alternativ kommen jedoch auch andere Schwefeloxide neben SO₂ in Frage. Die Verwendung des an sich bekannten Ätzgases Sauerstoff macht die Kontrolle der Ätzchemie besonders einfach.

Als weitere Prozeßparameter werden während der Ätzung eine Substratelektrodenspannung (Biasspannung) von 80 bis 200 Volt, eine Kühlung des Substrates auf -30°C bis -120°C und ein Ätzgasfluß von 7 sccm bis 100 sccm über den Prozeßgaseinlaß 17 in der Ätzkammer 12 eingestellt.

Besonders gute Ergebnisse werden erzielt, wenn eine Substrattemperatur von -65°C, ein Prozeßdruck von 2 µbar und eine Substratelektrodenspannung (Biasspannung) von 150 Volt gewählt wird.

Mittels der an der Substratelektrode 35 anliegenden, in das Substrat 30 eingekoppelten Biasspannung werden die erzeugten Ionen des Ätzgases bekanntermaßen aus der Ätzkammer 12 auf das Substrat 30 hin beschleunigt wobei sie Energie auf die Oberfläche des Substrates 30 und damit auch auf die über die strukturierte Hartstoffschicht der Ätzung zugängliche Oberfläche des Polymers 31 übertragen.

Die Kühlung des Substrates 30 bewirkt ein zumindest teilweises Einfrieren des jeweiligen Ätzprozesses an den Flanken 34, so daß auch ohne eine direkte chemische Passivierung der Flanken 34 der Polymerstruktur eine lateraler Ätzangriff auf die Flanken 34 bereits weitgehend verhindert wird.

Die Wirkung der Zugabe des schwefelhaltigen Gases, insbesondere von Schwefeldioxid, zu beispielsweise Sauerstoff als Ätzgas beruht auf folgendem Mechanismus:

Die im Plasma erzeugten und sich mit großer Geschwindigkeit im wesentlichen ungerichtet bewegenden Elektronen werden bei Berührung mit den Flanken 34 der Polymerstruktur dort zunächst 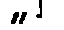 gepint" d.h. sie verbleiben an der Oberfläche der Flanken 34 und können wegen der fehlenden elektrischen Leitfähigkeit des Polymers 31 von dort nicht abgeführt werden. Dies führt zu einer wachsenden negativen Aufladung der Flanken 34 der Polymerstruktur. Neben den leichten und schnellen Elektronen befinden sich weiter auch positiv geladene Sauerstoffionen aus dem Ätzgas im Plasma, die über die anliegende Biasspannung stark gerichtet in Richtung zur Substratelektrode 35 und damit zum Grund 33 der Polymerstruktur beschleunigt werden. Durch die elektrisch negative Aufladung der Flanken 34 über die gepinten Elektronen kommt es jedoch, abhängig von der Aufladung der Flanken 34, zu einer Ablenkung der gerichteten Sauerstoffionen in Richtung auf die Flanken 34, so daß sich dort ein dynamisches Gleichgewicht zwischen negativer Elektronenaufladung und lonenentladung einstellt. Die Ablenkung der ursprünglich nahezu senkrecht zum Grund 33 einfallenden Sauerstoffionen auf die Flanken 34 führt weiter dazu, daß der ursprünglich anisotrop bzw. nahezu ausschließlich auf den Grund 33 gerichtete Ätzangriff aus dem Plasma nunmehr auch die Flanken 34 angreift, was zu den erwähnten unerwünschten Profilverschlechterungen bzw. bauchigen Ausformungen und zu einer hohen Oberflächenrauhigkeit der Flanken 34 der erzeugten Polymerstruktur führt.

Ohne diese Aufladung der Flanken 34 ist ein spontaner Ätzangriff des Ätzgases Sauerstoff auf die Flanken 34 dagegen nicht möglich, weil insbesondere auch aufgrund der niedrigen Substrattemperatur die dazu notwendige Aktivierungsenergie (sogenanntes 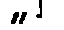 Ion Induced Chemical Etching") nicht zur Verfügung steht.

Die Zugabe von SO₂, das im Plasma zu positiv geladenen SO⁺-Ionen und S⁺-Ionen dissoziiert, führt dazu, daß diese positiv geladenen Ionen über die anliegende Biasspannung in Richtung der Oberfläche des Substrates 30 hin beschleunigt werden oder, im Fall einer fehlenden Biasspannung, dorthin diffundieren, wobei sie mit Kohlenstoffatomen des Polymers 31 Verbindungen eingehen.

Diese insbesondere an den Flanken 34 und auch am Grund 33 entstehenden Verbindungen weisen Schwefel-Kohlenstoff-Bindungen auf, die stabiler gegenüber einem Ätzangriff durch das Ätzgas Sauerstoff sind, als im Polymer 31 vorhandene Kohlenstoff-Kohlenstoff-Bindungen. Somit entsteht durch die SO₂-Zugabe eine Passivierung der zugänglichen Oberfläche des Polymers 31.

Weiter sind die vorhandenen hochenergetischen Sauerstoffionen im wesentlichen auf den Grund 33 hin gerichtet und behindern dort die Ausbildung von S-C-Bindungen bzw. lösen diese wieder durch Bereitstellung der erforderlichen Aktivierungsenergie. Insgesamt ist somit der Energieeintrag der hochenergetischen Sauerstoffionen am Grund 33 deutlich höher als an den Flanken 34, so daß am Grund 33 gebildete S-C-Bindungen wieder gelöst werden und nur an den Flanken 34 eine effektive Passivierung durch die Zugabe von Schwefeldioxid erzeugt wird.

Somit wird durch den Zusatz von Schwefeldioxid erreicht, daß der vertikal gerichtete Ätzangriff im Polymer 31 nahezu ungehindert weitergeht, während der laterale Ätzangriff zumindest weitgehend gestoppt wird, da an den Seitenwänden bzw. Flanken 34 die Aktivierungsenergie - unterstützt durch die niedrige Substrattemperatur - zum Aufbrechen gebildeter S-C-Bindungen nicht ausreicht. Daher unterbleibt die Ausbildung des unerwünschten bauchigen Profils der erzeugten Polymerstrukturen d.h. die erhaltene Flankensteilheit wird deutlich verbessert und die Oberflächenrauhigkeit vermindert.

Ein weiteres Ausführungsbeispiel sieht in Weiterführung des vorstehend erläuterten Ausführungsbeispiels vor, den Ätzprozeß derart zu führen, daß das Ätzgas zeitlich getaktet im periodischen Wechsel aus reinem Sauerstoff (Ätzschritt) und Schwefeldioxid (Passivierschritt) besteht. Dazu wird der Ätzkammer 12 in an sich bekannter Weise alternierend Sauerstoff und Schwefeldioxid über den Prozeßgaseinlaß 17 und eine zugeordnete Maschinensteuerung als Ätzgas zugeführt. Somit wird während der mit Sauerstoff als Ätzgas geführten Prozeßschritte im wesentlichen nur eine anisotrope Ätzung der Polymerstrukturen erzielt, während der mit Schwefeldioxid als Ätzgas geführten Prozeßschritte eine Passivierung der Flanken 34 vorgenommen wird. Eine typische Zeitdauer der Ätzschritte mit Sauerstoff liegt dabei zwischen 3 s und 10 s, während die Zeitdauer der Passivierschritte mit Schwefeldioxid bei 3 s bis 7 s liegt, so daß sich ein Verhältnis der Ätzzeit zur Passivierzeit von ca. 0,5 bis ca. 3 einstellt.

Eine besonders bevorzugte Variante dieses Ausführungsbeispiels sieht weiter vor, daß während der mit Schwefeldioxid geführten Prozeßschritte (Passivierschritte) die über die Substratelektrode 35 eingekoppelte Biasspannung über die Maschinensteuerung abgeschaltet wird und erst wieder mit oder kurz vor dem Obergang zu den mit Sauerstoff geführten Prozeßschritten eingeschaltet wird. Dies führt zu einer gleichmäßigeren Passivierung der Flanken 34. Weitere mögliche Prozeßparameter neben der Biasspannung um Einfluß auf die Stabilität der Passivierung zu nehmen, sind im übrigen beispielsweise die Substrattemperatur und der Prozeßdruck.

Die gezielte Steuerung des Ätz- und Passierprozesses, beispielsweise durch eine allmähliche zeitliche Veränderung der Prozeßgasanteile, der Biasspannung, der Zeitdauer der Passivierschritte oder der Substrattemperatur, mit dem Ätzfortschritt erlaubt es weiter, neben senkrechten Profilen in einfacher Weise auch keilförmige Polymerstrukturen aus dem Polymer 31 herauszustrukturieren. Dazu ist lediglich eine entsprechende zeitliche Variation mindestens eines dieser Parameter als Funktion der Ätzzeit über die Maschinensteuerung erforderlich. Derartige Verfahrenssteuerungen sind dem Fachmann an sich bekannt.

## Patentansprüche

1. Verfahren zur Herstellung von Polymerstrukturen auf einem mit einem Polymer (31) beschichteten Substrat (30) mittels eines Ätzprozesses mit einem Ätzgas, wobei das Substrat (30) in einer Ätzkammer (12) einer Plasmaätzanlage (1) angeordnet ist**, dadurch gekennzeichnet**, daß dem Ätzgas zumindest zeitweilig ein schwefelhaltiges Gas zugesetzt wird.

2. Verfahren nach Anspruch 1, dadurch gekennzeichnet, daß als schwefelhaltiges Gas ein Gas eingesetzt wird, das beim Ätzen in der Plasmaätzanlage (1) in ein mit dem Ätzprozeß kompatibles Gas und Schwefel aufgespalten wird.

3. Verfahren nach Anspruch 1 oder 2, dadurch gekennzeichnet, daß als schwefelhaltiges Gas Schwefeldioxid eingesetzt wird.

4. Verfahren nach Anspruch 1, dadurch gekennzeichnet, daß der Ätzprozeß bei einer Substrattemperatur von -30°C bis -120°C durchgeführt wird.

5. Verfahren nach Anspruch 1, dadurch gekennzeichnet, daß der Ätzprozeß bei einem Prozeßdruck von 0,2 µbar bis 10 µbar, insbesondere bei 2 µbar, durchgeführt wird.

6. Verfahren nach Anspruch 1, dadurch gekennzeichnet, daß das Substrat (30) mit einer Substratelektrode (35) in Verbindung steht, über die eine Biasspannung von 80 Volt bis 200 Volt, insbesondere von 150 Volt, in das Substrat (30) eingekoppelt wird.

7. Verfahren nach Anspruch 1, dadurch gekennzeichnet, daß als Plasmaätzanlage (1) eine ECR-Plasmaätzanlage oder eine ICP-Plasmaätzanlage eingesetzt wird.

8. Verfahren nach Anspruch 1, dadurch gekennzeichnet, daß als Ätzgas ein zumindest zeitweilig sauerstoffhaltiges Ätzgas, insbesondere ein Gemisch aus Sauerstoff und Schwefeldioxid, eingesetzt wird.

9. Verfahren nach Anspruch 8, dadurch gekennzeichnet, daß das Gemisch 20 Vol.% bis 80 Vol.% Schwefeldioxid enthält.

10. Verfahren nach mindestens einem der vorangehenden Ansprüche, dadurch gekennzeichnet, daß das schwefelhaltige Gas dem Ätzgas zeitlich getaktet zugegeben wird.

11. Verfahren nach Anspruch 10, dadurch gekennzeichnet, daß als Ätzgas in zeitlich periodischem Wechsel Sauerstoff und Schwefeldioxid eingesetzt wird.

12. Verfahren nach Anspruch 10 oder 11, dadurch gekennzeichnet, daß die Einkoppelung Biasspannung mit der getakteten Zugabe des schwefelhaltigen Ätzgases zeitlich derart korreliert wird und daß während der Zugabe des schwefelhaltigen Gases zu dem Ätzgas die Biasspannung zumindest weitgehend abgeschaltet wird.
